# EUROPÄISCHE PATENTSCHRIFT

(11) **EP 4 196 837 B1**
(45) Veröffentlichungstag und Bekanntmachung des Hinweises auf die Patenterteilung: **08.10.2025**
(21) Anmeldenummer: 21765854.1
(22) Anmeldetag: 16.08.2021
(51) Int. Cl.: G02B 21/00, G02B 21/06, G02B 21/36

(54) **OPTISCHE VORRICHTUNG, NACHRÜSTSATZ UND VERFAHREN ZUR ERZEUGUNG VON LICHTBLÄTTERN MIT HILFE EINES REFLEKTORS**
OPTICAL DEVICE, RETROFITTING SET AND METHOD FOR PRODUCING LIGHT SHEETS BY MEANS OF A REFLECTOR
DISPOSITIF OPTIQUE, ENSEMBLE DE RATTRAPAGE ET PROCÉDÉ DE PRODUCTION DE FEUILLES DE LUMIÈRE AU MOYEN D'UN RÉFLECTEUR

(30) Priorität: 14.08.2020 DE 102020210370
(43) Veröffentlichungstag der Anmeldung: 21.06.2023
(73) Patentinhaber: Leica Microsystems CMS GmbH, 35578 Wetzlar (DE)
(72) Erfinder: FAHRBACH, Florian, 35578 Wetzlar (DE)
(74) Vertreter: Schaumburg und Partner Patentanwälte mbB
(86) Internationale Anmeldenummer: PCT/EP2021/072734
(87) Internationale Veröffentlichungsnummer: WO 2022/034246

(56) Entgegenhaltungen:
- WO-A1-2014/009080
- WO-A1-2018/050888
- DE-A1- 102007 047 464
- DE-A1- 102015 214 302

## Beschreibung

Die Erfindung betrifft eine optische Vorrichtung für ein Lichtblatt-Mikroskop, einen Nachrüstsatz für ein Lichtblatt-Mikroskop mit einer derartigen optischen Vorrichtung, die Verwendung einer Reflektoranordnung zur Erzeugung von Lichtblättern in einem Lichtblatt-Mikroskop und ein Verfahren zur automatischen Erzeugung von Lichtblättern. Mithilfe von Lichtblättern lassen sich in der Mikroskopie dünne Schichten einer Probe beleuchten, während der Rest der Probe unbeleuchtet bleibt. Dies erhöht die Bildqualität, da die nichtfokussierten Bereiche unbeleuchtet bleiben.

Die WO 2014/009 080 A1 betrifft ein Lichtblattmikroskop, welches Anregungslicht über einen Anregungsstrahlengang zu einer Probe leitet und von der Probe kommendes Detektionslicht über einen Detektionsstrahlengang zu einem Detektionsmittel leitet. Ähnlich zeigt die DE 10 2007 047 464 A1 eine optische Anordnung für ein Lichtblattmikroskop. Diese wird zur Photomanipulation verwendet. Das hierfür verwendete Licht stammt von einer Manipulationslichtquelle, wird jedoch in einen Beleuchtungsstrahlengang zur Formung eines im Wesentlichen ebenen Manipulationslichtblatts eingekoppelt. Die WO 2018/050 888 A1 beschreibt ein Lichtblattmikroskop mit einem dynamischen Lichtblatt, welches aus einem Linienfokus erzeugt wird, und umfasst eine Descanned-Detektionseinrichtung zur Detektion des Detektionslichts. Die DE 10 2015 214 302 A1 beschreibt eine Vorrichtung zur Erzeugung eines zweidimensionalen Beleuchtungsmusters aus Lichtstrahlbündeln. Die Vorrichtung weist eine Steuereinrichtung, ein Mikrospiegelarray, eine Beleuchtungseinrichtung, eine Sammeleinrichtung und ein Mikrolinsenarray auf. Die Steuereinrichtung verkippt die Mikrospiegel zur Erzeugung eines reflektiven Gitters mit einstellbarem Blaze-Winkel. Somit werden Intensitätsmaxima erzeugt, die durch die Sammeleinrichtung und durch die Mikrolinsen transmittiert werden und das Lichtstrahlbündel erzeugen.

Die Erzeugung mehrerer unterschiedlicher Lichtblätter eröffnet weitere Anwendungsmöglichkeiten: Um ein dreidimensionales Abbild der Probe zu erhalten, werden mehrere bevorzugt parallele Lichtblätter nacheinander erzeugt, die jeweils unterschiedliche Schichten der Probe beleuchten. Um Verschattungen und Refraktionen in einem Lichtblatt zu vermeiden, werden mehrere koplanare Lichtblätter erzeugt, die dieselbe Schicht aus unterschiedlichen Richtungen beleuchten.

Unabhängig davon, ob die Mehrzahl von Lichtblättern mehrere Schichten nacheinander oder dieselbe Schicht aus unterschiedlichen Richtungen beleuchten soll, werden zu ihrer Erzeugung komplexe, teure und vor allem fehleranfällige Mechaniken, wie beispielsweise bewegte Spiegel eingesetzt.

Die vorliegende Erfindung setzt sich zum Ziel, eine einfachere, zuverlässigere und vor allem kostengünstigere Möglichkeit zu schaffen, mehrere Lichtblätter zu erzeugen.

Dieses Ziel wird bei der eingangs genannten optischen Vorrichtung gemäß Anspruch 1 dadurch erreicht, dass die optische Vorrichtung eine Reflektoranordnung mit einem Strahleingang, an dem ein Lichtstrahl in die Reflektoranordnung einkoppelbar ist, mit einem Strahlausgang und mit einem sich innerhalb der Reflektoranordnung erstreckenden Strahlengang aufweist, wobei der Strahlengang in der Reflektoranordnung am Strahleingang beginnt und den Strahlausgang mehrfach passiert, wobei bei jeder Passage des Strahlengangs am Strahlausgang ein Teilstrahl aus der Reflektoranordnung ausgekoppelt ist und wobei die am Strahlausgang ausgekoppelten Teilstrahlen entweder parallel und beabstandet voneinander verlaufend oder von einem gemeinsamen Ausgangspunkt ausgehend aus der Reflektoranordnung gerichtet sind.

Der eingangs genannte Nachrüstsatz gemäß Anspruch 12 weist eine derartige optische Vorrichtung auf und ist in einem Beleuchtungsstrahlengang eines Lichtblattmikroskops anordenbar ausgestaltet.

Das Ziel wird ferner erreicht gemäß Anspruch 13 durch Verwendung einer Reflektoranordnung mit einem Strahleingang, einem Strahlausgang und einem sich in der Reflektoranordnung befindlichen Strahlengang, der am Strahleingang beginnt und den Strahlausgang mehrfach passiert, wobei bei jeder Passage des Strahlausgangs ein Teilstrahl aus der Reflektoranordnung ausgekoppelt ist und wobei die am Strahlausgang ausgekoppelten Teilstrahlen entweder parallel und beabstandet voneinander verlaufen oder von einem gemeinsamen scheinbaren Ausgangspunkt ausgehen, in einem Lichtblatt-Mikroskop.

Schließlich wird das oben genannte Ziel gemäß Anspruch 14 auch durch ein Verfahren zur automatischen Erzeugung von Lichtblättern mit unterschiedlicher Ausbreitungsrichtung aus einem Lichtstrahl erreicht, wobei das Verfahren folgende Verfahrensschritte aufweist: Einkoppeln des Lichtstrahls in eine Reflektoranordnung; mehrfaches Reflektieren des Lichtstrahls in der Reflektoranordnung, wobei der Lichtstrahl mehrfach auf einen Strahlausgang der Reflektoranordnung trifft, und dort teilweise zurück in die Reflektoranordnung reflektiert wird; Auskoppeln eines aus der Reflektoranordnung gerichteten Teilstrahls aus dem in der Reflektoranordnung reflektierten Lichtstrahl am Strahlausgang, wenn der Lichtstrahl in der Reflektoranordnung auf den Strahlausgang tritt, wobei entweder der ausgekoppelte Teilstrahl parallel zu und beabstandet von einem vorher ausgekoppelten Teilstrahl verläuft oder der ausgekoppelte Teilstrahl und ein vorher ausgekoppelter Teilstrahl von einem gemeinsamen Ausgangspunkt ausgehen; und Erzeugen unterschiedlich orientierter Lichtblätter aus den ausgekoppelten Teilstrahlen.

Die erfindungsgemäße optische Vorrichtung, der erfindungsgemäße Nachrüstsatz, die erfindungsgemäße Verwendung der Reflektoranordnung in einem Lichtblatt-Mikroskop und das erfindungsgemäße Verfahren erreichen das oben genannte Ziel dadurch, dass anstelle einer Mechanik die Reflektoranordnung auf optischem Wege durch Reflexion die unterschiedlichen Teilstrahlen aus einem einzigen Lichtstrahl erzeugt, wobei aus den unterschiedlichen Teilstrahlen dann die unterschiedlich orientierten Lichtblätter erzeugt werden. Die Reflektoranordnung arbeitet verschleißfrei und erzeugt die Lichtblätter in einer höheren Geschwindigkeit als eine Mechanik.

Der Ausdruck Teilstrahl oder Lichtstrahl bezeichnet nicht nur die konkrete elektromagnetische Welle bzw. den Photonenstrahl, die bzw. der sich in der Strahlrichtung ausbreitet, sondern auch im Sinne der geometrischen Optik die optische Achse, entlang der sich die elektromagnetische Welle bzw. der Photonenstrahl entlang bewegt bzw. entlang bewegen würde, ohne dass eine solche eine elektromagnetische Welle bzw. Photonenstrahl vorhanden sein muss. In der Reflektoranordnung bewegt sich der Lichtstrahl entlang des Strahlenganges. Der Strahlengang bezeichnet also den Weg, den ein Lichtstrahl in der Reflektoranordnung zurücklegt. Im Folgenden sind Weiterbildungen der obigen Gegenstände mit ihrem jeweiligen technischen Effekt erläutert. Die einzelnen Weiterbildungen sind jeweils für sich vorteilhaft und beliebig und unabhängig miteinander kombinierbar. Insbesondere können die nachstehenden Weiterbildungen unabhängig voneinander sowohl für die Verbesserung der Vorrichtung als auch für die Verbesserung des Verfahrens verwendet werden.

Der Strahlausgang kann beispielsweise punktförmig oder flächig sein und/oder mehrere, beispielsweise punktförmige oder flächige, voneinander beabstandete Bereiche aufweisen. Er bezeichnet allgemein diejenigen Abschnitte der Reflektoranordnung, an denen die Teilstrahlen aus der Reflektoranordnung austreten.

Am Strahlausgang befindet sich gemäß Anspruch 1 ein Strahlteiler, so dass sichergestellt ist, dass der Lichtstrahl zum Teil in der Reflektoranordnung verbleibt. Der Strahlteiler kann beispielsweise einen oder mehrere teildurchlässige Spiegel aufweisen.

Der Strahleingang kann den Strahlausgang räumlich überlappen oder mit dem Strahlausgang räumlich zusammenfallen. So ist beispielsweise eine kompakte Bauform möglich, wenn Strahleingang und Strahlausgang räumlich zusammenfallen, da der Lichtstrahl an derselben Stelle in die Reflektoranordnung eintritt, an der er ausgekoppelt wird.

Eine kompakte Bauform lässt sich ferner erreichen, wenn wenigstens ein Teilstrahl in Verlängerung des in die Reflektoranordnung eingekoppelten Lichtstrahls aus der Reflektoranordnung austritt und/oder die Teilstrahlen die Reflektoranordnung in derselben Richtung verlassen, in der der Lichtstrahl in die Reflektoranordnung eintritt. Gemäß Anspruch 1 weist die Reflektoranordnung wenigstens zwei Spiegel auf.

Der Strahlengang in der Reflektoranordnung weist mehrere Umlenkstellen auf, an denen er seine Richtung ändert. An jeder Umlenkstelle befindet sich eine Spiegelanordnung. Dabei kann, wie oben bereits erwähnt, wenigstens eine Spiegelanordnung einen Strahlteiler aufweisen. An den übrigen Umlenkstellen befinden sich bevorzugt Spiegel, die den Lichtstrahl vollständig reflektieren.

Ein teildurchlässiger Spiegel kann einen über seine Fläche unterschiedlichen Reflektionsgrad aufweisen. So kann beispielsweise der Reflektionsgrad an einer Umlenkstelle größer sein als der Reflektionsgrad an jeweils einer im Strahlengang nachfolgenden weiteren Umlenkstelle. Dies ermöglicht es, Teilstrahlen mit gleicher Intensität auszukoppeln.

In seiner einfachsten Ausgestaltung umfasst der Strahlengang wenigstens eine Umlenkstelle, an der er vollständig in Richtung zum Strahlenausgang umgelenkt ist, sowie eine Teilreflektion am Strahlausgang, an der er zurück in die Reflektoranordnung umgelenkt ist. Der Strahleingang kann am Strahlausgang wenigstens einmal umgelenkt sein. Eine solche einfache Ausgestaltung kann beispielsweise zwei sich gegenüberliegende, planparallele Spiegel aufweisen, von denen einer teildurchlässig ist.

Bevorzugt ist der in die Reflektoranordnung eingekoppelte Lichtstrahl kollimiert. Der Lichtstrahl sollte ferner entlang des gesamten Strahlengangs in der Reflektoranordnung kollimiert sein. Ferner sollten die aus der Reflektoranordnung austretenden Teilstrahlen kollimiert sein. Jede dieser Maßnahmen führt für sich dazu, dass die aus den Lichtstrahlen erzeugten Lichtblätter scharf abgegrenzt und exakt fokussiert werden können.

Um die Lichtblätter exakt fokussieren zu können, ist gemäß einer vorteilhaften Ausgestaltung vorgesehen, dass sich im Strahlengang kein refraktives Element, insbesondere keine Linse befindet.

Der Strahlengang kann sich in einem Gas oder einem Vakuum befinden. So kann beispielsweise die Reflektoranordnung ein abgedichtetes Volumen aufweisen, das gasgefüllt ist oder ein Vakuum enthält, und in dem sich der Strahlengang erstreckt. Alternativ kann der Strahlengang sich auch in einem Glaskörper erstrecken. So kann beispielsweise die Reflektoranordnung monolithisch aus einem Glasblock gefertigt sein.

Die Reflektoranordnung kann ein Prisma aufweisen. Die Umlenkstellen in der Reflektoranordnung können durch verspiegelte Flächen des Glasblocks gebildet sein.

Die Spiegel an den Umlenkstellen sind bevorzugt plan, so dass insbesondere der in der Reflektoranordnung entlang des Strahlengangs reflektierte Lichtstrahl kollimiert bleibt.

Wenigstens ein Spiegel kann relativ zu einem anderen Spiegel um wenigstens zwei insbesondere zueinander senkrechte Raumachsen verkippt angeordnet sein. Dies ermöglicht es, einen zusätzlichen seitlichen Versatz im Strahlengang zu erzeugen. Durch einen solchen seitlichen Versatz kann die geometrische Lage und Orientierung der aus der Reflektoranordnung austretenden Teilstrahlen an die baulichen Erfordernisse angepasst werden.

Gemäß einer weiteren vorteilhaften Ausgestaltung kann wenigstens ein Spiegel gegenüber wenigstens einem anderen Spiegel der Reflektoranordnung beweglich sein. Insbesondere kann eine manuell oder motorisch betätigte Verstelleinrichtung vorhanden sein, um den wenigstens einen Spiegel relativ zu dem wenigstens einem anderen Spiegel zu bewegen. Eine solche Bewegung kann eine Kippbewegung, also eine Drehung um wenigstens eine Raumachse, und/oder eine translatorische Bewegung entlang wenigstens einer Raumachse sein.

Nach einer Passage hat der Strahlengang bevorzugt sämtliche Umlenkstellen der Reflektoranordnung passiert. Bei dieser Ausgestaltung durchläuft der Lichtstrahl vor jeder Auskopplung eines Teilstrahls die gesamte Reflektoranordnung. In einer bevorzugten Ausgestaltung ist dabei die Länge des Strahlengangs zwischen aufeinanderfolgenden Passagen des Strahlausgangs konstant. Dies führt dazu, dass die Weglängendifferenz zweier aufeinanderfolgender Teilstrahlen konstant ist. Die Weglängendifferenz ist dabei die Differenz der Weglängen, die zwei unterschiedliche Teilstrahlen in der Reflektoranordnung zurücklegen.

In einer Ausgestaltung kann wenigstens eine Spiegelanordnung vorgesehen sein, die zueinander verkippte Teilspiegel aufweist. Jeder Teilspiegel ist dabei bevorzugt plan. Die einzelnen Teilspiegel können separate Bauteile oder Facetten eines monolithischen Spiegelkörpers sein. Bei einer solchen Ausgestaltung kann der Strahlengang bei jedem Durchlaufen der Reflektoranordnung an einem anderen Teilspiegel reflektiert sein.

Die von den Teilspiegeln bei jedem Durchlauf reflektierten Lichtstrahlen können auf einem gemeinsamen Punkt gerichtet sein. Dadurch lässt sich in der Reflektoranordnung der Effekt erzeugen, dass sämtliche Teilstrahlen von einem gemeinsamen Punkt ausgehen. Sind die Teilspiegel plan, bleiben die von dem gemeinsamen Punkt ausgehenden bzw. auf den gemeinsamen Punkt hinzulaufenden Lichtstrahlen kollimiert, wenn der eingehende Lichtstrahl kollimiert war.

Bevorzugt sind die Teilspiegel um zueinander parallele Raumachsen, insbesondere um lediglich eine Raumachse zueinander verkippt. Die Verwendung nur einer Raumachse erleichtert die Justage und geometrische Ausgestaltung der Reflektoranordnung. Jeder Teilspiegel weist bevorzugt genau eine Umlenkstelle auf, wird also vom Strahlengang nur einmal passiert. Die einzelnen Teilspiegel sind bevorzugt um jeweils die selbe Raumachse relativ zueinander verkippt. Insbesondere können jeweils zwei nebeneinander passierte Teilspiegel um jeweils denselben Raumwinkel zueinander verkippt sein.

Gemäß einer weiteren vorteilhaften Ausgestaltung durchläuft der Strahlengang die Reflektoranordnung mehrfach. Dabei kann der Strahlengang den Strahlausgang bei jedem Durchlauf einmal passieren. Der erste Durchlauf erstreckt sich dabei vom Strahleingang bis zum Strahlausgang, an dem der erste Teilstrahl ausgekoppelt ist. Jeder weitere Durchlauf erstreckt sich dann vom Strahlausgang wieder zurück zum Strahlausgang, wobei jeder weitere Durchlauf wenigstens eine Reflexion an einer Umlenkstelle aufweist.

Bevorzugt sind die einzelnen Durchläufe des Strahlengangs zumindest abschnittsweise voneinander beabstandet. Dies führt dazu, dass auch die Teilstrahlen am Strahlausgang voneinander beabstandet sind und damit auf einfache Weise zur Erzeugung unterschiedlich orientierter Lichtblätter verwendet werden können.

Der Strahlengang kann bzw. alle Durchläufe des Strahlengangs können in einer Ebene liegen. Bei jedem Durchlauf kann der Strahlengang gegenüber dem vorherigen Durchlauf parallel versetzt sein. Der Strahlengang in der Reflektoranordnung kann wendelförmig oder spiralförmig sein.

Der Strahlengang kann wenigstens eine Stelle aufweisen, die der Strahlengang bei jedem Durchlauf durchläuft und die beispielsweise den gemeinsamen Ausgangspunkt bildet. Der gemeinsame Ausgangspunkt befindet sich bevorzugt in der Reflektoranordnung, kann sich jedoch auch außerhalb der Reflektoranordnung befinden. Eine solche Anordnung ist beispielsweise sinnvoll, wenn eine telezentrische Optik eingesetzt wird. In einem solchen Fall kann der gemeinsame Ausgangspunkt in der hinteren Fokusebene bzw. einer dazu optisch konjugierten Ebene der telezentrischen Optik liegen. Die telezentrische Anordnung kann ein Objektiv und/oder eine Zylinderlinse aufweisen. Wie oben erläutert, kann eine solche Stelle beispielsweise durch zueinander verkippte Teilspiegel erzeugt werden.

Die optische Vorrichtung kann gemäß einer weiteren vorteilhaften Ausgestaltung eine Lichtblattoptik aufweisen, die ausgestaltet ist, unterschiedlich orientierte Lichtblätter zu erzeugen. Die telezentrische optische Anordnung und/oder eine Zylinderlinse kann Teil der Lichtblattoptik sein. Die Teilstrahlen sind durch die Lichtblattoptik gerichtet. Die Lichtblattoptik ist insbesondere ausgebildet, aus jedem Teilstrahl ein unterschiedlich orientiertes Lichtblatt zu erzeugen.

Die unterschiedlich orientierten Lichtblätter sind bevorzugt koplanar und weisen unterschiedliche Ausbreitungsrichtungen auf. In anderen Worten sind die unterschiedlichen Lichtblätter bei dieser Ausgestaltung in einer gemeinsamen Ebene relativ zueinander verkippt. Eine solche Ausgestaltung dient dazu, Verschattungen in der beleuchteten Schicht durch Objekte in der Probe zu verringern.

Die unterschiedlichen Lichtblätter können sich in einer anderen Ausgestaltung schneiden. Insbesondere kann die optische Vorrichtung ein Probenvolumen aufweisen, indem eine zu untersuchende Probe angeordnet wird. Die unterschiedlich orientierten Lichtblätter überlagern bzw. schneiden sich in diesem Fall bevorzugt im Probenvolumen.

Die unterschiedlichen Lichtblätter können gemäß einer weiteren vorteilhaften Ausgestaltung beabstandet zueinander und parallel zueinander verlaufen. Diese Ausgestaltung ist vorteilhaft, um verschiedene Schichten der Probe zu beleuchten.

Gemäß einer weiteren vorteilhaften Ausgestaltung kann die optische Vorrichtung eine Lichtquelle aufweisen, die ausgebildet ist, den in die Reflektoranordnung einkoppelbaren bzw. eingekoppelten Lichtstrahl zu erzeugen. Der Lichtstrahl weist bevorzugt eine Kohärenzlänge auf, die kleiner ist als die kürzeste Länge des Strahlengangs zwischen zwei aufeinanderfolgend ausgekoppelten Teilstrahlen. Dies stellt sicher, dass das Licht der Teilstrahlen zueinander inkohärent ist. Die Reflektoranordnung dient folglich dazu, zueinander inkohärente Teilstrahlen aus einem ursprünglich kohärenten Lichtstrahl zu erzeugen. Dem gleichbedeutend ist, dass die kürzeste Länge des Strahlengangs zwischen aufeinanderfolgend ausgekoppelten Teilstrahlen größer ist als die Kohärenzlänge des Lichtstrahls, aus dem die Teilstrahlen erzeugt sind. Die Länge des Strahlengangs lässt sich beispielsweise verändern, wenn wenigstens ein Spiegel gegenüber wenigstens einem anderen Spiegel oder ein Spiegelpaar gegenüber einem anderen Spiegelpaar der Reflektoranordnung beweglich ist.

Die Lichtquelle kann ein Laser sein, beispielsweise ein Gaslaser, ein Diodenlaser oder ein CW-Laser. Der Lichtstrahl, der in die Reflektoranordnung eingekoppelt ist, kann einen einzelnen Lichtpuls bzw. eine Pulsfolge oder ein kontinuierliches Licht aufweisen.

Zwischen der Lichtquelle und dem Strahleingang der Reflektoranordnung sollte sich eine Kollimationsoptik befinden.

Der Lichtstrahl weist am Strahleingang bevorzugt einen elliptischen Querschnitt auf. Unabhängig davon können die Teilstrahlen am Strahlausgang einen elliptischen Querschnitt aufweisen.

Die Teilstrahlen können, insbesondere bei einer gepulsten Lichtquelle, zeitlich aufeinanderfolgend ausgekoppelt sein. Dadurch können beispielsweise durch die Lichtblattoptik die unterschiedlich orientierten Lichtblätter ebenfalls zeitlich aufeinanderfolgend erzeugt sein. Bei einer Tiefenstaffelung paralleler Lichtblätter können so nacheinander unterschiedliche Schichten beleuchtet und abhängig voneinander von einem Detektor erfasst werden.

Am Strahlausgang können die Teilstrahlen in einer Ebene liegen, was den Aufbau eines eventuellen nachgeschalteten Lichtblattobjekts erheblich vereinfacht. Die Teilstrahlen können dabei nebeneinander in der Ebene oder Mittenebene des Strahlengangs oder in einer Ebene quer zur Ebene oder Mittenebene des Strahlengangs angeordnet sein. Die Mittenebene ist beispielsweise eine durch den Strahlengang gelegte Ausgangsebene.

Die optische Vorrichtung kann Teil eines Lichtblatt-Mikroskops sein und in einem Beleuchtungsstrahlengang des Lichtblatt-Mikroskop angeordnet sein. Der Beleuchtungsstrahlengang erstreckt sich von einer Lichtquelle zu einem Probenvolumen.

Die optische Vorrichtung oder das Lichtblatt-Mikroskop kann eine Detektoroptik aufweisen, die optional mit einem Detektor, beispielsweise einem Flächen- bzw. Matrixsensor versehen ist. Die optische Achse der Detektoroptik steht dabei bevorzugt senkrecht auf der optischen Achse der Lichtblattoptik und/oder senkrecht auf den Ebenen der Lichtblätter.

Im Folgenden sind die oben beschriebenen Gegenstände anhand der beigefügten Zeichnungen beispielhaft näher erläutert. Nach Maßgabe der obigen Ausführungen können dabei in den Zeichnungen wiedergegebene Merkmale weggelassen werden, wenn es auf die mit diesen Merkmalen jeweils verknüpften technischen Effekte bei einer Anwendung nicht ankommen sollte. Gleichermaßen können in den Zeichnungen nicht wiedergegebene Merkmale nach Maßgabe der obigen Ausführungen hinzugefügt werden, sollte es bei einer bestimmten Anwendung auf die mit diesen Merkmalen verknüpften technischen Effekte ankommen.

Der Einfachheit halber sind in den Zeichnungen Elemente, die einander hinsichtlich Funktion und schriftlich oder Struktur entsprechen, jeweils mit demselben Bezugszeichen versehen.

Es zeigen:
- Fig. 1: eine schematische Darstellung einer optischen Vorrichtung in einem Lichtblatt-Mikroskop;
- Fig. 2: eine schematische Darstellung einer weiteren Vorrichtung;
- Fig. 3: eine schematische Darstellung einer weiteren Vorrichtung;
- Fig. 4: eine schematische Darstellung einer weiteren optischen Vorrichtung;
- Fig. 5: eine Ansicht der Fig. 4 entlang des Pfeils V;
- Fig. 6: eine schematische Darstellung einer weiteren optischen Vorrichtung;
- Fig. 7: eine Ansicht der Fig. 6 entlang des Pfeils VII;
- Fig. 8: eine schematische Darstellung einer weiteren optischen Vorrichtung;
- Fig. 9: eine Ansicht der Fig. 8 entlang des Pfeils IX;
- Fig. 10: eine schematische Darstellung einer weiteren optischen Vorrichtung;
- Fig. 11: eine weitere schematische Darstellung einer optischen Vorrichtung in einem Lichtblatt-Mikroskop;
- Fig. 12: eine schematische Darstellung einer weiteren Vorrichtung;
- Fig. 13: eine schematische Darstellung einer weiteren optischen Vorrichtung; und
- Fig. 14: eine Ansicht der Fig. 13 entlang des Pfeils IXa.

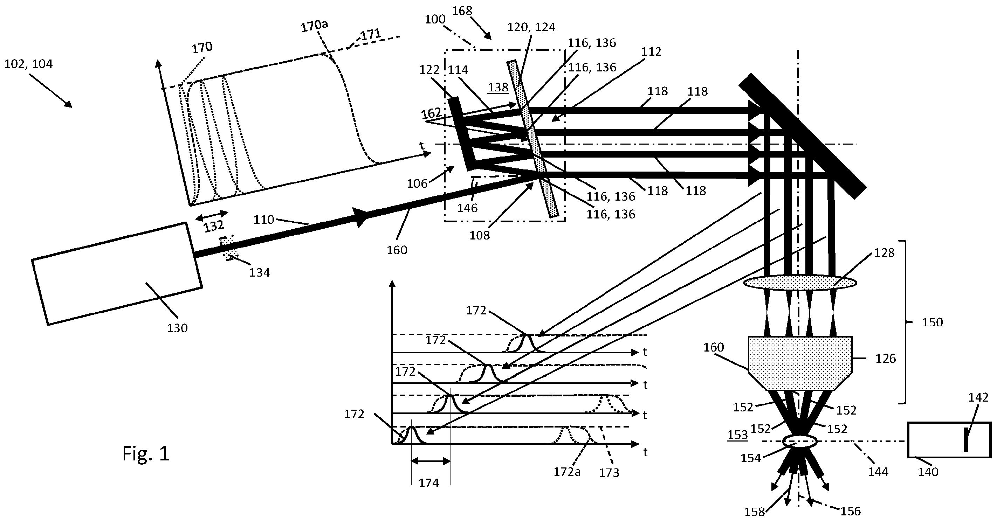

Zunächst werden Aufbau und Funktion einer optischen Vorrichtung 100 sowie eines Nachrüstsatzes 168 anhand des schematisch in der Fig. 1 dargestellten Mikroskops 102 erläutert. Bei dem Mikroskop 102 handelt es sich beispielsweise um ein Lichtblatt-Mikroskop 104.

Die optische Vorrichtung 100 ist in einem Beleuchtungsstrahlengang 160 des Mikroskops 102 angeordnet. Der Beleuchtungsstrahlengang 160 erstreckt sich von einer Lichtquelle 130 bis zu einem Probenvolumen 154, in das eine durch das Mikroskop 102 zu untersuchende Probe (nicht dargestellt), beispielsweise eine biologische Probe, platziert wird. Eine Detektoroptik 140 mit einem lichtempfindlichen Detektor 142, beispielsweise einem Flächensensor wie einem CMOS-Sensor oder einem CCD-Matrixsensor, kann Teil des Mikroskops 102 oder der optischen Vorrichtung 100 sein. Eine optische Achse 144 der Detektoroptik 140 schneidet das Probenvolumen 154 und bevorzugt auch den Beleuchtungsstrahlengang 160. Diese optische Achse 144 steht vorzugsweise senkrecht auf dem Beleuchtungsstrahlengang 160.

Die Lichtquelle 130 kann ein Laser, beispielsweise ein Gaslaser oder ein Diodenlaser sein. Die Lichtquelle 130 kann gepulst sein, also Lichtpulse 170 erzeugen. Die Lichtpulse 170 können je nach Ausgestaltung der Lichtquelle kürzer oder länger sein. Das Bezugszeichen 170a zeigt beispielhaft einen Lichtpuls längerer Zeitdauer t. Alternativ kann die Lichtquelle auch kontinuierliches Licht 171 abgeben. Beispielsweise kann die Lichtquelle ein CW-Laser sein. Die Lichtquelle kann kohärentes Licht mit einer Kohärenzlänge 132 erzeugen.

Die Lichtquelle 130 erzeugt Licht, das sich entlang des Lichtstrahles 110 ausbreitet. Eine Kollimationsoptik 134, die Teil der Lichtquelle 130 oder separat davon sein kann, ist im Lichtstrahl 110 angeordnet, um diesen zu kollimieren. Der Lichtstrahl 110 bewegt sich entlang des Beleuchtungsstrahlenganges 160 und tritt in die optische Vorrichtung 100 ein. Die optische Vorrichtung 100 weist eine Reflektoranordnung 106 auf, in die der Lichtstrahl 110 eingekoppelt wird.

In der Reflektoranordnung 106 bewegt sich der Lichtstrahl 110 entlang eines Strahlenganges 114. Entlang des Strahlenganges 114 wird der Lichtstrahl mehrfach hin und her reflektiert, wobei er einen Strahlausgang 112 der Reflektoranordnung 106 bzw. der optischen Vorrichtung 100 mehrfach passiert. Bei jeder Passage 116 des Strahlausganges 112 wird ein Teilstrahl 118 ausgekoppelt. Der Teilstrahl 118 verlässt die Reflektoranordnung 106 und die optische Vorrichtung 100, bevorzugt in Verlängerung des in die Reflektoranordnung 106 eingekoppelten Lichtstrahles 110.

Die Teilstrahlen 118 verlassen, wie in Fig. 1 beispielhaft gezeigt, bevorzugt parallel und beabstandet, insbesondere gleich weit voneinander beabstandet, die Reflektoranordnung 106.

Der Strahlausgang 112 kann von einem Strahlteiler 120, der beispielsweise als ein teildurchlässiger Spiegel 124 ausgestaltet ist, gebildet sein. Dem teildurchlässigen Spiegel 124 liegt ein vollständig reflektierender Spiegel 122 bevorzugt parallel gegenüber. Beide Spiegel 122, 124 sind bevorzugt plan.

Der Strahlengang 114 weist folglich an jedem Spiegel 122, 124 eine Umlenkstelle 136 auf, an der er seine Richtung ändert, wobei jede der Umlenkstellen 136 von einem Spiegel 122, 124 gebildet wird. Die Umlenkstellen 136 sind voneinander beabstandet. An jedem Spiegel 122, 124 wird der Strahlengang 114 zum jeweils anderen Spiegel 122, 124 umgelenkt.

Da sich im Strahlengang 114 kein refraktives Element, insbesondere keine Linse befindet, bleibt der Lichtstrahl 110 in der Reflektoranordnung 106 kollimiert, wenn er schon vorher kollimiert war. Ebenso sind sämtliche Teilstrahlen 118 kollimiert.

Bei der in Fig. 1 dargestellten Ausgestaltung erstreckt sich der Strahlengang 114 in einem gas- oder vakuumgefüllten Volumen 138, vorzugsweise abgedichteten Volumen der Reflektoranordnung 106. Alternativ davon können die Spiegel 122, 124 auch die sich gegenüberliegenden verspiegelten Seitenflächen eines Glasblocks ein.

Jeder Teilstrahl 118 legt eine unterschiedlich lange Weglänge in der Reflektoranordnung 106 zurück. Beim zuerst ausgekoppelten Teilstrahl 118 ist diese Weglänge am kürzesten. Jeder danach ausgekoppelter Teilstrahl 118 weist eine entsprechend größere Weglänge auf.

Ist die Weglänge, die ein Teilstrahl 118 gegenüber einem zuvor ausgekoppelten Teilstrahl 118 in der Reflektoranordnung 106 zurücklegt, größer als die Kohärenzlänge 132 des Lichts der Lichtquelle 130, so sind diese beiden ausgekoppelten Teilstrahlen nicht mehr zueinander kohärent. Bevorzugt sind alle Teilstrahlen 118 zueinander inkohärent.

Die Reflektoranordnung 106 spaltet den Lichtstrahl 110 in mehrere Teilstrahlen 118 auf, die Teil des Beleuchtungsstrahlenganges 160 sind.

Die Teilstrahlen 118 treten in eine Lichtblattoptik 150 ein, die ausgebildet ist, aus den unterschiedlichen Teilstrahlen 118 jeweils unterschiedlich orientierte Lichtblätter 152 zu erzeugen. Die unterschiedlich orientierten Lichtblätter 152 können parallel und beabstandet zueinander verlaufen. Bei der in Fig. 1 dargestellten Ausgestaltung schneiden sich sämtliche Lichtblätter 152 im Probenvolumen 154 bzw. an einem Punkt. Sie haben unterschiedliche Ausbreitungsrichtungen. Liegen sämtliche Teilstrahlen 118, aus denen Lichtstrahlen erzeugt werden, in einer Ebene 500, so sind die aus der Lichtblattoptik 150 austretenden Lichtblätter koplanar. Die optische Achse 144 der Detektoroptik 144 steht senkrecht auf die Lichtblätter 152. Eine optische Achse 154 der Lichtblattoptik verläuft bevorzugt senkrecht zur optischen Achse 144 der Detektoroptik 140.

Die Lichtblattoptik 150 weist bevorzugt eine Zylinderlinse 128 und ein Objektiv 126 und/oder eine telezentrische optische Anordnung 126 auf.

Ist der Lichtstrahl 110 ein Lichtpuls 170, 170a, so sind auch die Teilstrahlen 118 Teillichtpulse 172 bzw. 172a, wobei die Dauer der Lichtpulse 170, 170a des Lichtstrahls 110 genauso groß wie die Dauer der Teillichtpulse 172, 172a. Ein kontinuierlicher Lichtstrahl 171 führt dagegen zu einem kontinuierlichen Teilstrahl 173. Die Lichtintensitäten der Teillichtstrahlen 118 sind natürlich jeweils geringer als die Lichtintensität des Lichtstrahls 110.

Ist der Lichtstrahl 110 ein Lichtpuls 170, 170a, so führen die unterschiedlichen Weglängen der Teilstrahlen 118 in der Reflektoranordnung 106 dazu, dass die die Teilstrahlen 118 bildenden Teillichtpulse 172, 172a zeitlich aufeinanderfolgend aus der Reflektoranordnung 106 ausgekoppelt werden. Dabei kann eine Zeitdauer 174 zwischen zeitlich aufeinanderfolgend ausgekoppelten Teilstrahlen 118 größer sein als die Pulsdauer der einzelnen Lichtpulse 172. Die aus den Teilstrahlen 118 erzeugten Lichtblätter 152 werden entsprechend zeitlich aufeinanderfolgend und insbesondere zeitlich nicht überlappend erzeugt.

Die Weglängenunterschiede in der Reflektoranordnung 106 können durch einfaches Verstellen des Abstandes zwischen den beiden Spiegeln 122, 124 und/oder durch eine Verstellung des Einfallswinkels 146, in dem der Lichtstrahl 110 am Strahleingang 108 auf den jeweiligen Spiegel 122, 124 tritt, an die jeweiligen Erfordernisse, beispielsweise an eine Kohärenzlänge 132 oder einen erforderlichen zeitlichen Abstand 174 angepasst werden. Hierzu kann beispielsweise die Reflektoranordnung 106 als Ganzes verkippt werden.

Zu beachten ist, dass in Fig. 1 der Lichtstrahl 110 am Strahleingang 108 auf den Strahlteiler 120 bzw. den teildurchlässigen Spiegel 124 trifft. Der erste ausgekoppelte Teilstrahl 118 ist demnach nicht reflektiert, sondern tritt direkt durch den Strahlteiler 120. Selbstverständlich kann stattdessen der Lichtstrahl 110 auch auf den Spiegel 122 treffen. In diesem Fall treten die Teilstrahlen 118 in einer um 180° gedrehten Richtung aus der Reflektoranordnung 106 heraus, was zu einer kompakteren Form führt.

Die Durchlässigkeit des teildurchlässigen Spiegels 124 bzw. des Strahlteilers 120 kann örtlich variabel sein, so dass jeder ausgekoppelte Teilstrahl dieselbe Intensität aufweist. Insbesondere kann die Durchlässigkeit proportional zur Anzahl der Durchläufe zunehmen, insbesondere sich verdoppeln.

Bevorzugt weist der Lichtstrahl 110 und jeder Teilstrahl 118 einen elliptischen Querschnitt auf.

In der Reflektoranordnung 106 hat nach jeder Passage 116 des Strahlteilers 120 bzw. des Strahlausgangs 112 seit der vorangegangenen Passage 116 sämtliche Umlenkstellen 136 der Reflektoranordnung 106 passiert.

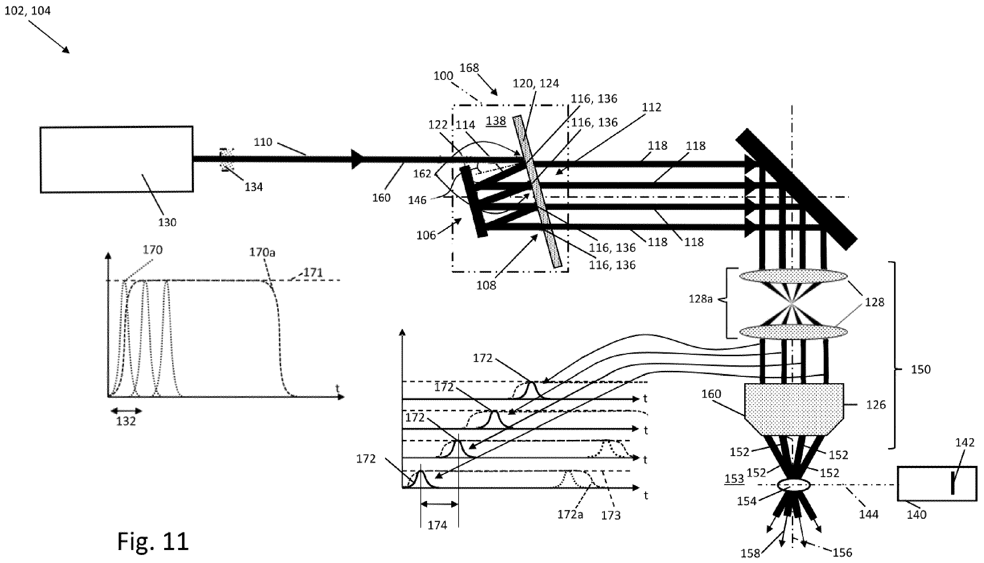

In der Fig. 11 ist eine weitere Ausgestaltung der optischen Vorrichtung schematisch dargestellt. Diese Ausgestaltung weist im Vergleich zu jener der Fig. 1 einen leicht modifizierten Aufbau auf. Die obigen Ausführungen zu Fig. 1 gelten, abgesehen von im Folgenden explizit genannten Unterschieden, auch für die in Fig. 11 gezeigte optische Vorrichtung.

Die Lichtquelle 130 ist im Vergleich zu Fig. 1 an einer anderen Position angeordnet. Die Funktionsweise der Lichtquelle 130, insbesondere die Erzeugung der Teilstrahlen 118 wird dadurch nicht verändert.

Die Linse 128 kann in der in Fig. 11 gezeigten Ausgestaltung um eine weitere Linse ergänzt werden und somit ein Teleskop 128a ausbilden. Das Teleskop 128a und das Objektiv 126 und/oder die telezentrische optische Anordnung 126 bilden die Lichtblattoptik 150.

Die Strahlen können einen elliptischen Querschnitt haben, wobei eine kurze Achse der Ellipse entlang der gleichen Richtung zeigt, in der auch die Teilstrahlen 118 beabstandet sind.

Die elliptischen Strahlen können z.B. über ein Teleskop aus zwei Zylinderlinsen zwischen Lichtquelle 130 und Reflektoranordnung 106 erzeugt werden.

Jedem Teilstrahl 118 kann durch eine geeignete Optik ein elliptischer Querschnitt aufgeprägt werden.

Sofern die Teilstrahlen 118 ein elliptisches Profil aufweisen, dann kann die Zylinderlinse 128 der Fig. 1 weggelassen oder als telezentrisches Teleskop 128a ausgeführt werden, wie in Fig. 11 schematisch dargestellt.

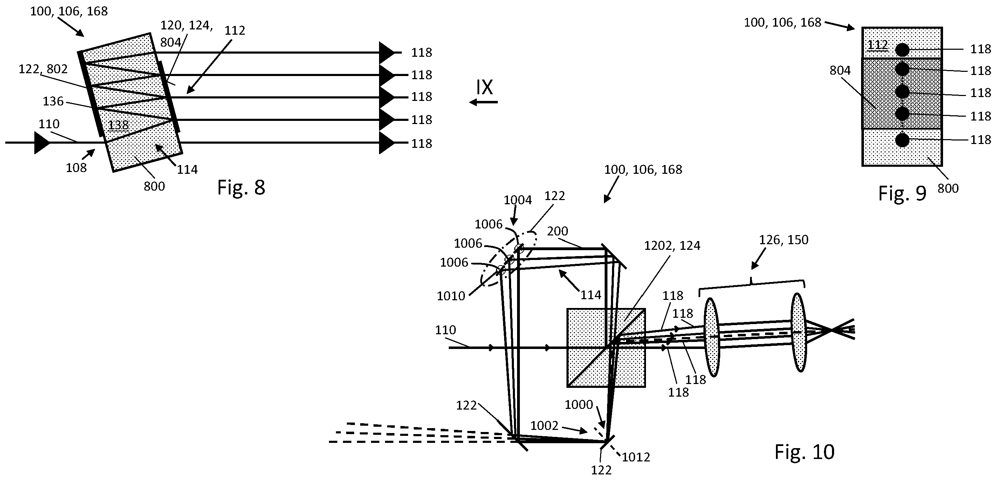

In den Fig. 8 und 9 ist eine Variante der optischen Vorrichtung 100 bzw. der Reflektoranordnung 106 der Fig. 1 gezeigt, bei der die Reflektoranordnung 106 aus einem bevorzugt monolithischen Glasblock 800 gefertigt ist. Die Spiegel 122 sind zu verspiegelten Flächen 802 des Glasblocks 800 gebildet, der Strahlteiler 120 bzw. der teildurchlässige Spiegel 124 zu einer teilverspiegelten Fläche 804. Ansonsten unterscheiden sich Funktion und Aufbau nicht von der Reflektoranordnung 106 der Fig. 1.

Die Weglänge 162 eines Durchlaufs jeweils von Strahlausgang 112 zu Strahlausgang 112 ist in Fig. 1 recht kurz und bevorzugt für jeden Durchlauf gleich. Weist das Licht der Lichtquelle 130 eine große Kohärenzlänge 132 auf, so reicht unter Umständen die von zwei aufeinanderfolgend ausgekoppelten Teilstrahlen 118 zurückgelegte Weglängendifferenz im Strahlengang 114 nicht aus, um zueinander inkohärente Teilstrahlen 118 zu erzeugen. In einem solchen Fall kann eine Reflektoranordnung 106 bevorzugt sein, deren Strahlengang 114 länger ist.

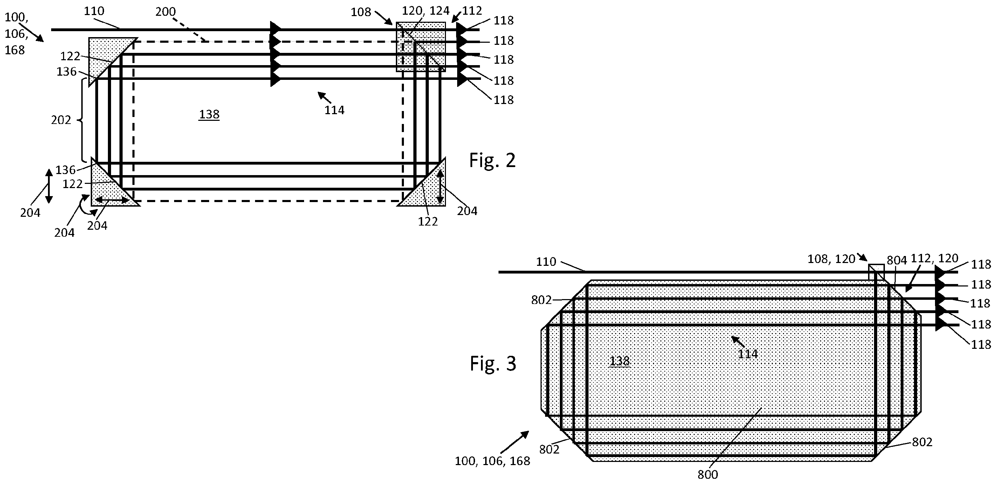

In den Fig. 2 bis 7 sowie 10 sind Reflektoranordnungen 106 gezeigt, die längere Strahlengänge 114 aufweisen und sich daher für Lichtquellen mit großen Kohärenzlängen 132 eignen. Der Kürze halber ist im Folgenden lediglich auf die Unterschiede zu den vorangegangenen Ausgestaltungen eingegangen. Soweit nicht anders expliziert angegeben, treffen folglich die Erläuterungen zu den übrigen Ausgestaltungen auch auf diese Ausgestaltungen zu.

Bei der Ausgestaltung der Fig. 2 weist die Reflektoranordnung 106 vier Spiegel 122, 124 auf, wobei ein Spiegel 124 teildurchlässig ist und als Strahlteiler 120 den Strahlausgang 112 bildet.

Der Strahleingang 108 ist lediglich beispielhaft wieder am Strahlteiler 120 angeordnet. Er kann sich jedoch auch an jedem anderen Spiegel 122 befinden. Dann werden jedoch die Teilstrahlen 118 nicht in Verlängerung des in die Reflektoranordnung eingekoppelten Lichtstrahls 110 ausgekoppelt, sondern in einem Winkel von beispielsweise 90°, 180°, 270° oder 360° relativ zum Lichtstrahl 110.

In Fig. 2 ist ein Durchlauf bzw. Umlauf 200 des Strahlenganges 114 von Strahlausgang 112 zu Strahlausgang 112 zur Verdeutlichung gestrichelt dargestellt. Abschnitte 202 des Strahlenganges 114 zwischen zwei gleichen, aufeinanderfolgenden Umlenkstellen 136 sind jeweils parallel zueinander versetzt und weisen unterschiedliche Längen auf.

Die Spiegel 122 können Retroreflektoren, beispielsweise Tripelprismen sein. Selbstverständlich können auch einfache Spiegel oder Prismen verwendet werden. Das Volumen 138 ist gasgefüllt oder ein Vakuum.

Die Reflektoranordnung 106 der Fig. 3 weist dieselbe grundsätzliche Strahlengeometrie, insbesondere denselben Strahleingang 108 wie die Ausgestaltung in Fig. 2 auf. Allerdings ist die Reflektoranordnung 106 in Fig. 3, ähnlich der Fig. 8 und 9, von einem Glasblock 800 gebildet, der verspiegelte Flächen 802 aufweist. Der Strahlengang 114 erstreckt sich vollständig im Glasblock 800. Zur Einkopplung des Lichtstrahls in den Glasblock 800 wird am Strahlengang 114 ein Strahlteiler 120 verwendet, der Teil des Glasblocks 800 sein kann oder ein separates Element. Am Strahlausgang 112 ist die Fläche 804 des Glasblocks 800 teilverspiegelt, so dass dort ein Strahlteiler entsteht.

Der Nachteil bei der Verwendung eines Glasblocks 800 wie bei der Ausführung der Fig. 3 anstelle separater Spiegel 122, 124 wie bei der Ausführung der Fig. 2 liegt darin, dass eine Anpassung des Strahlenganges 114 nicht mehr möglich ist. Beispielsweise kann nach Fig. 2 wenigstens ein Spiegel 122 oder ein Paar von Spiegeln 122, 124 in einer Verstellrichtung 204 gegenüber wenigstens einen der anderen Spiegel 122, 124 verstellbar sein, um die Länge des Strahlenganges und/oder die Lage und/oder Anzahl wenigstens einzelner Teilstrahlen zu verändern. So kann beispielsweise die Länge des Strahlenganges 114 verändert werden, wenn ein Paar von benachbarten Spiegeln weg von dem gegenüberliegenden Spiegelpaar bewegt wird. Die Lage und/oder Anzahl der Teilstrahlen 118 kann durch Verschieben eines Spiegels verändert werden. Die Orientierung der Teilstrahlen 118 kann durch Verkippen eines oder mehrerer Spiegel 122, 124 justiert werden.

Die Verstellung eines Spiegels 122 entlang der Verstellrichtung 204 kann manuell oder motorisch erfolgen.

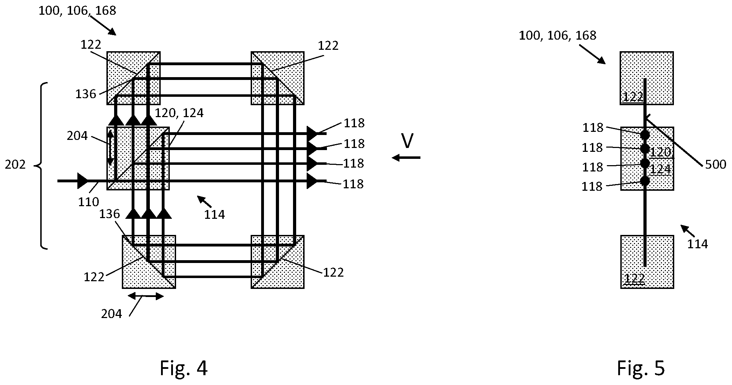

Bei der Ausführungsform der Fig. 4 und 5 befindet sich der Strahlteiler 120 mittig im Strahlengang 114 und nicht mehr an einem der Spiegel 122 an den Ecken des Strahlengangs 114. Bei dieser Ausgestaltung ist es möglich, die Lage der Teilstrahlen 118 durch eine Lageveränderung des Strahlteilers 120 zu bewirken. Die Verstellrichtung 204 verläuft dabei beispielsweise parallel zur Längsrichtung des Abschnittes 202 des Strahlengangs, in dem sich der Strahlteiler 120 befindet. Alternativ oder zusätzlich kann auch wenigstens ein Spiegel 122 in einer Verstellrichtung 204 parallel zum Strahlengang 114 vor oder nach der vom Spiegel 122 jeweils gebildeten Umlenkstelle 136 verschieblich sein.

Bei den Ausführungen der Fig. 1 bis 5 liegen die Teilstrahlen 118 jeweils in der Ebene 500, in der auch der Strahlengang 114 liegt. Der Strahlengang und die Teilstrahlen 118 sind koplanar.

Alle Umlenkpunkte 136 liegen in der Ebene, in der auch die Teilstrahlen 118 liegen. Die Ebene 500 kann eine Mittenebene oder eine Ausgleichsebene des Strahlenganges 114 sein.

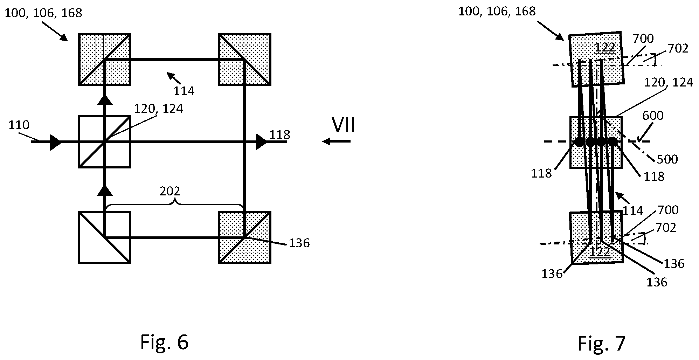

Je nach der Orientierung der Lichtblattoptik 150 (Fig. 1) und dem zur Verfügung stehenden Raum kann es notwendig sein, dass die Teilstrahlen 118 in einer Ebene 600 liegen, die im Wesentlichen senkrecht zur Ebene 500 des Strahlenganges 114 liegt. Eine solche Ausgestaltung ist in den Fig. 6 und 7 dargestellt. Eine Anordnung der Teilstrahlen 118 in einer Ebene 600 senkrecht zur Ebene des Strahlenganges 114 wird durch ein Verkippen zweier Spiegel 122 der Reflektoranordnung 106 um jeweils die gleiche Raumrichtung 700 um den gleichen Winkel 702 ermöglicht. Die Raumrichtung 700 ist dabei senkrecht zu der Ebene 500 des Strahlenganges 114.

Bei den Ausführungsformen der Fig. 1 bis 7 verlassen die Teilstrahlen beabstandet, vorzugsweise gleich beabstandet, voneinander und parallel zueinander die Reflektoranordnung 106. Je nach verwendeter Lichtblattoptik 150 kann es jedoch wünschenswert sein, dass die Teilstrahlen 118, die die Reflektoranordnung 106 verlassen, von einem gemeinsamen Punkt 1000 ausgehen, wie dies in Fig. 10 dargestellt ist. Der Lichtstrahl 110 ist dabei bevorzugt wie die Teilstrahlen 118 kollimiert.

Der gemeinsame Punkt 1000 liegt bevorzugt im Strahlengang 114 und bildet eine Stelle 1002 bzw. idealerweise einen Punkt, die bei jedem Durchlauf des Lichtstrahls durch die Reflektoranordnung 106 passiert wird. Der gemeinsame Punkt 1000 kann sich an einem Spiegel 122, am Strahlteiler 120 oder an einem anderen Punkt in der Reflektoranordnung 106 befinden. Es ist grundsätzlich auch möglich, dass sich der gemeinsame Punkt 1000 jenseits des Strahlausgangs 112, also außerhalb der Reflektoranordnung 106 befindet. Der gemeinsame Punkt 1000 befindet sich bevorzugt in der hinteren Fokusebene 100 bzw. einer dazu optisch konjugierten Ebene der Lichtblattoptik 150.

Ein Strahlengang 114 mit auf einem gemeinsamen Punkt 1000 zulaufenden Strahlengang bzw. von dem gemeinsamen Punkt 1000 auseinanderlaufenden Teilstrahlen kann beispielsweise dadurch erreicht werden, dass ein Spiegel 122 eine Spiegelanordnung 1004 enthält, die mehrere zueinander um eine Raumachse 1010 verkippte Teilspiegel 1006 aufweist. Jeder Durchlauf 200 des Strahlengangs 114 trifft auf einen anderen Teilspiegel 1006. Alle Teilspiegel 1006 sind auf den gemeinsamen Punkt 1000 gerichtet.

Die Teilstrahlen 118 liegen dabei bevorzugt wieder ein einer Ebene 500. Dabei kann auch die Spiegelverkippung der Ausführung der Fig. 6 und 7 bei der Ausführung der Fig. 10 eingesetzt werden, um die Orientierung der Ebene 500, in der die Teilstrahlen 118 angeordnet sind, zu verändern.

In Fig. 10 kann der Strahlteiler 120 an beliebiger Stelle im Strahlengang 114 angeordnet sein. Die in Fig. 10 dargestellte Anordnung hat, wie die Anordnung in den Fig. 1 bis 9 den Vorteil, dass die Teilstrahlen 118 in Verlängerung des Lichtstrahles 110 aus der Reflektoranordnung 106 austreten. Legt man den Strahlteiler 120 an eine andere Stelle in den Strahlengang 114, so kann die Orientierung der Teilstrahlen 118 relativ zum Lichtstrahl 110 beliebig verändert werden.

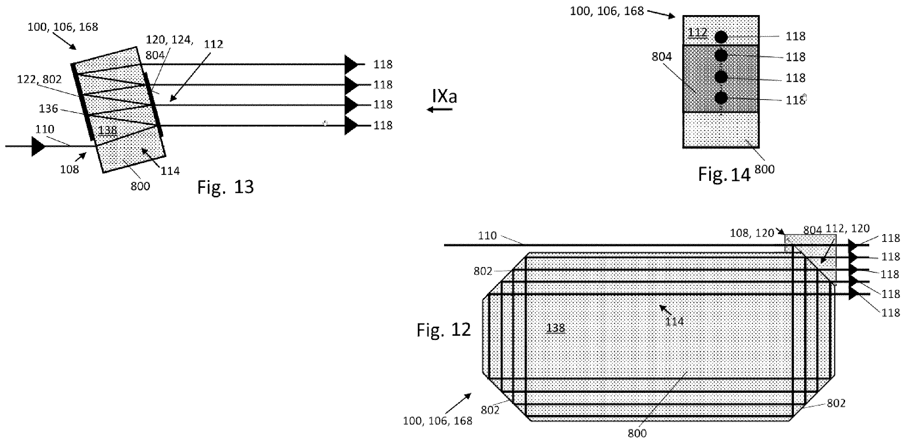

Die Reflektoranordnung 106 der Fig. 12 weist, wie die Reflektoranordnung 106 der Fig. 3 dieselbe grundsätzliche Strahlengeometrie, insbesondere denselben Strahleingang 108 wie die Ausgestaltung in Fig. 2 auf. Die Reflektoranordnung 106 der Fig. 12 ist im Vergleich zur Reflektoranordnung 106 der Fig. 3 lediglich im Hinblick auf den Strahlteiler 120 modifiziert

In den Fig. 13 und 14 ist eine weitere Variante der optischen Vorrichtung 100 bzw. der Reflektoranordnung 106 der Fig. 1 gezeigt, bei der die Reflektoranordnung 106 aus einem bevorzugt monolithischen Glasblock 800 gefertigt ist. Diese Variante ist im Vergleich zu jener der Fig. 8 und 9 nur leicht modifiziert.

### Bezugszeichen

- 100: optische Vorrichtung
- 102: Mikroskop
- 104: Lichtblatt-Mikroskop
- 106: Reflektoranordnung
- 108: Strahleingang
- 110: Lichtstrahl
- 112: Strahlausgang
- 114: Strahlengang in der Reflektoranordnung
- 116: Passage des Strahlengangs am Strahlausgang vorbei
- 118: Teilstrahl
- 120: Strahlteiler
- 122: Spiegel
- 124: Spiegel
- 126: Objektiv und/oder telezentrische optische Anordnung
- 128: Zylinderlinse
- 128a: telezentrisches Teleskop
- 130: Lichtquelle
- 132: Kohärenzlänge
- 134: Kollimationsoptik
- 136: Umlenkstelle
- 138: Volumen
- 140: Detektoroptik
- 142: Detektor
- 144: optische Achse der Detektoroptik
- 146: Einfallswinkel
- 150: Lichtblattoptik
- 152: Lichtblatt
- 153: gemeinsame Ebene der Lichtblätter
- 154: Probenvolumen
- 156: optische Achse der Lichtblattoptik
- 158: Ausbreitungsrichtung der Lichtblätter
- 160: Beleuchtungsstrahlengang
- 162: Weglänge eines Durchlaufs
- 168: Nachrüstsatz
- 170, 170a: Lichtpuls
- 171: kontinuierlicher Lichtstrahl
- 172, 172a: Teillichtpuls
- 173: kontinuierlicher Teilstrahl
- 174: Verzögerung
- 200: Durchlauf durch die bzw. Umlauf in der Reflektoranordnung
- 202: Abschnitt des Strahlengangs zwischen zwei Umlenkstellen
- 204: Verstellrichtung
- 500: Ebene des Strahlenganges
- 600: Ebene der Teilstrahlen
- 700: Raumrichtung
- 702: Verkippwinkel eines Spiegels um die Raumrichtung
- 800: Glasblock
- 802: verspiegelte Fläche
- 804: teilverspiegelte Fläche
- 1000: gemeinsamer Ausgangspunkt
- 1002: gemeinsam passierte Stelle im Strahlengang
- 1004: Spiegelanordnung
- 1006: Teilspiegel
- 1010: Raumachse
- 1012: hintere Brennebene der telezentrischen optischen Anordnung

## Patentansprüche

1. Optische Vorrichtung (100) für ein Lichtblatt-Mikroskop (104),
wobei die optische Vorrichtung eine Reflektoranordnung (106) mit einem Strahleingang (108), an dem ein Lichtstrahl (110) in die Reflektoranordnung einkoppelbar ist, mit einem Strahlausgang (112) und mit einem sich innerhalb der Reflektoranordnung erstreckenden Strahlengang (114) aufweist,
wobei der Strahlengang in der Reflektoranordnung am Strahleingang beginnt und den Strahlausgang mehrfach passiert,
wobei bei jeder Passage (116) des Strahlengangs am Strahlausgang ein Teilstrahl (118) aus der Reflektoranordnung ausgekoppelt ist,
wobei die am Strahlausgang ausgekoppelten Teilstrahlen entweder parallel und beabstandet voneinander verlaufend oder von einem gemeinsamen Ausgangspunkt (1000) ausgehend aus der Reflektoranordnung gerichtet sind,
wobei sich am Strahlausgang (112) ein Strahlteiler (120) befindet,
wobei die Reflektoranordnung (106) wenigstens zwei Spiegel (122, 124) aufweist und
wobei die optische Vorrichtung eine Lichtblattoptik (150) aufweist, durch die die Teilstrahlen (118) gerichtet sind und die ausgebildet ist, aus jedem Teilstrahl ein unterschiedlich orientiertes Lichtblatt (152) zu erzeugen.

2. Optische Vorrichtung (100) nach Anspruch 1, wobei der Strahlengang (114) die Reflektoranordnung (106) mehrfach durchläuft, wobei der Strahlengang den Strahlausgang (112) bei jedem Durchlauf (200) einmal passiert und wobei die Durchläufe zumindest abschnittsweise voneinander beabstandet sind.

3. Optische Vorrichtung (100) nach Anspruch 2, wobei der Strahlengang (114) wenigstens eine Stelle (1002) aufweist, die der Strahlengang (114) bei jedem Durchlauf (200) durchläuft und die den gemeinsamen Ausgangspunkt (1000) bildet.

4. Optische Vorrichtung (100) nach einem der Ansprüche 1 bis 3, wobei die Reflektoranordnung (106) wenigstens eine Spiegelanordnung (1004) aufweist, die zueinander verkippte Teilspiegel (1006) aufweist.

5. Optische Vorrichtung (100) nach Anspruch 4, wobei der Strahlengang (114) bei jedem Durchlauf (200) von einem anderen Teilspiegel (1006) reflektiert ist.

6. Optische Vorrichtung (100) nach Anspruch 4 oder 5, wobei die Teilspiegel (1006) um zueinander parallele Raumachsen (1010) verkippt sind.

7. Optische Vorrichtung (100) nach einem der Ansprüche 1 bis 6, wobei die optische Vorrichtung eine telezentrische optische Anordnung (126) aufweist, in dessen hinterer Brennebene (1012) oder in einer dazu optisch konjugierten Ebene der gemeinsame Ausgangspunkt (1000) der ausgekoppelten Teilstrahlen (118) liegt.

8. Optische Vorrichtung (100) nach einem der Ansprüche 1 bis 7, wobei die Teilstrahlen (118) in einer Ebene (600) liegen.

9. Optische Vorrichtung (100) nach einem der Ansprüche 1 bis 8, wobei die optische Vorrichtung eine Lichtquelle (130) aufweist, die ausgebildet ist, den Lichtstrahl (110) zu erzeugen und wobei der Lichtstrahl (110) eine Kohärenzlänge (132) aufweist, die kleiner ist als die kürzeste Länge des Strahlenganges (114) zwischen zwei aufeinanderfolgend ausgekoppelten Teilstrahlen (118).

10. Optische Vorrichtung nach Anspruch 1, wobei sich die unterschiedlich orientierten Lichtblätter (152) schneiden.

11. Lichtblattmikroskop (104) mit einer optischen Vorrichtung (100) nach einem der Ansprüche 1 bis 10, die in einem Beleuchtungsstrahlengang (160) angeordnet ist, der sich von einer Lichtquelle (130) zu einem Probenvolumen (154) erstreckt.

12. Nachrüstsatz für ein Lichtblattmikroskop (104), wobei der Nachrüstsatz eine optische Vorrichtung (100) nach einem der Ansprüche 1 bis 10 aufweist, die in einem Beleuchtungsstrahlengang (160) des Lichtblattmikroskops anordenbar ausgestaltet ist.

13. Verwendung einer Reflektoranordnung (106) mit einem Strahleingang (108), einem Strahlausgang (112) und einem sich in der Reflektoranordnung befindlichen Strahlengang (114), der am Strahleingang beginnt und den Strahlausgang mehrfach passiert, wobei bei jeder Passage (116) des Strahlausgangs ein Teilstrahl (118) aus der Reflektoranordnung ausgekoppelt ist, wobei die am Strahlausgang ausgekoppelten Teilstrahlen entweder parallel und beabstandet voneinander verlaufen oder von einem gemeinsamen scheinbaren Ausgangspunkt (1000) ausgehen, in einem Lichtblattmikroskop (104) nach Anspruch 11.

14. Verfahren zur automatischen Erzeugung von Lichtblättern (152) mit unterschiedlicher Ausrichtung aus einem Lichtstrahl (110), wobei das Verfahren folgende Verfahrensschritte aufweist:
- Einkoppeln des Lichtstrahls (110) in eine Reflektoranordnung (106),
- mehrfaches Reflektieren des Lichtstrahles (110) in der Reflektoranordnung, wobei der Lichtstrahl mehrfach auf einen Strahlausgang (116) der Reflektoranordnung trifft und dort teilweise zurück in die Reflektoranordnung reflektiert wird,
- jeweils Auskoppeln eines aus der Reflektoranordnung gerichteten Teilstrahles (118) aus dem in der Reflektoranordnung reflektierten Lichtstrahl am Strahlausgang, wenn der Lichtstrahl in der Reflektoranordnung auf den Strahlausgang trifft, wobei entweder der ausgekoppelte Teilstrahl parallel zu und beabstandet von einem vorher ausgekoppelten Teilstrahl verläuft oder der ausgekoppelte Teilstrahl und ein vorher ausgekoppelter Teilstrahl von einem gemeinsamen Ausgangspunkt (1000) ausgehen, und
- Erzeugen unterschiedlich orientierter Lichtblätter aus den ausgekoppelten Teilstrahlen.

15. Verfahren nach Anspruch 14, wobei der Lichtstrahl (110) und die Teilstrahlen (118) Lichtpulse (170, 172) sind und die unterschiedlich orientierten Lichtblätter (152) aus zeitlich aufeinander folgenden Teilstrahlen (118) zeitlich nacheinander erzeugt werden.

## Claims

1. An optical device (100) for a light sheet microscope (104),
wherein the optical device has a reflector arrangement (106) with a beam inlet (108) at which a light beam (110) can be coupled into the reflector arrangement, with a beam outlet (112) and with a beam path (114) extending within the reflector arrangement,
wherein the beam path in the reflector arrangement begins at the beam inlet and passes the beam outlet several times,
wherein, at each passage (116) of the beam path at the beam outlet, a partial beam (118) is decoupled from the reflector arrangement,
wherein the partial beams, decoupled at the beam outlet, are directed either running parallel and spaced from each other or emanating from a common starting point (1000) out of the reflector arrangement,
wherein a beam splitter (120) is located at the beam outlet (112),
wherein the reflector arrangement (106) has at least two mirrors (122, 124) and
wherein the optical device has a light sheet optic (150) through which the partial beams (118) are directed and which is configured to produce a differently oriented light sheet (152) from each partial beam.

2. The optical device (100) according to claim 1, wherein the beam path (114) passes through the reflector arrangement (106) several times, wherein the beam path passes the beam outlet (112) once during each pass (200) and wherein the passes are spaced apart from one another at least in sections.

3. The optical device (100) according to claim 2, wherein the beam path (114) has at least one place (1002) through which the beam path (114) passes during each pass (200) and which forms the common starting point (1000).

4. The optical device (100) according to any one of claims 1 to 3, wherein the reflector arrangement (106) has at least a mirror arrangement (1004) which has partial mirrors (1006) tilted relative to one another.

5. The optical device (100) according to claim 4, wherein the beam path (114) at each pass (200) is reflected by another partial mirror (1006).

6. The optical device (100) according to claim 4 or 5, wherein the partial mirrors (1006) are tilted about mutually parallel spatial axes (1010).

7. The optical device (100) according to any one of claims 1 to 6, wherein the optical device has a telecentric optical arrangement (126), in the rear focal plane (1012) of which or in a plane optically conjugate thereto lies the common starting point (1000) of the decoupled partial beams (118).

8. The optical device (100) according to any one of claims 1 to 7, wherein the partial beams (118) lie in a plane (600).

9. The optical device (100) according to any one of claims 1 to 8, wherein the optical device has a light source (130) which is configured to produce the light beam (110) and wherein the light beam (110) has a coherence length (132) which is smaller than the shortest length of the beam path (114) between two successively decoupled partial beams (118).

10. The optical device of claim 1, wherein the differently oriented light sheets (152) intersect.

11. A light sheet microscope (104) with an optical device (100) according to any one of claims 1 to 10, which is arranged in an illumination beam path (160), extending from a light source (130) to a sample volume (154).

12. A retrofitting set for a light sheet microscope (104), wherein the retrofitting set has an optical device (100) according to any one of claims 1 to 10, which is configured to be arranged in an illumination beam path (160) of the light sheet microscope.

13. Use of a reflector arrangement (106) with a beam inlet (108), a beam outlet (112) and a beam path (114), located in the reflector arrangement, which begins at the beam inlet and passes the beam outlet several times, wherein, at each passage (116) of the beam outlet, a partial beam (118) is decoupled from the reflector arrangement, wherein the partial beams, decoupled at the beam outlet, either run parallel and spaced from one another, or emanate from a common apparent starting point (1000), in a light sheet microscope (104) according to claim 11.

14. A method for automatically producing light sheets (152) with different alignment from a light beam (110), wherein the method has the following method steps:
- coupling the light beam (110) into a reflector arrangement (106),
- multiple reflection of the light beam (110) in the reflector arrangement, wherein the light beam repeatedly strikes a beam outlet (116) of the reflector arrangement and is partially reflected back into the reflector arrangement,
- each time decoupling a partial beam (118), directed from the reflector arrangement, from the light beam, reflected in the reflector arrangement at the beam outlet, when the light beam in the reflector arrangement strikes the beam outlet, wherein either the decoupled partial beam runs parallel to and spaced from a previously decoupled partial beam or the decoupled partial beam and a previously decoupled partial beam emanate from a common starting point (1000), and
- producing differently oriented light sheets from the decoupled partial beams.

15. The method according to claim 14, wherein the light beam (110) and the partial beams (118) are light pulses (170, 172) and the differently oriented light sheets (152) are produced in temporal succession from temporally successive partial beams (118).

## Revendications

1. Dispositif optique (100) pour un microscope à feuille de lumière (104),
dans lequel le dispositif optique présente un ensemble réflecteur (106) avec une entrée de faisceau (108) sur laquelle un faisceau lumineux (110) peut être injecté dans l'ensemble réflecteur, avec une sortie de faisceau (112) et avec un trajet de faisceau (114) s'étendant à l'intérieur de l'ensemble réflecteur,
dans lequel le trajet du faisceau dans l'ensemble réflecteur commence à l'entrée de faisceau et traverse la sortie de faisceau plusieurs fois,
dans lequel, à chaque passage (116) du trajet de faisceau sur la sortie de faisceau, un faisceau partiel (118) est découplé de l'ensemble réflecteur,
dans lequel les faisceaux partiels découplés sur la sortie de faisceau sont soit parallèles et distants les uns des autres, soit sont dirigés depuis un point de départ commun (1000) en partant de l'ensemble réflecteur,
dans lequel un séparateur de faisceau (120) se trouve sur la sortie de faisceau (112), dans lequel l'ensemble réflecteur (106) présente au moins deux miroirs (122, 124) et dans lequel le dispositif optique présente une optique à feuille de lumière (150) par laquelle les faisceaux partiels (118) sont dirigés et qui est réalisée pour générer à partir de chaque faisceau partiel une feuille de lumière (152) orientée différemment.

2. Dispositif optique (100) selon la revendication 1, dans lequel le trajet de faisceau (114) traverse l'ensemble réflecteur (106) plusieurs fois, dans lequel le trajet de faisceau traverse la sortie de faisceau (112) une fois à chaque passage (200) et dans lequel les passages sont espacés les uns des autres au moins par sections.

3. Dispositif optique (100) selon la revendication 2,
dans lequel le trajet de faisceau (114) présente au moins un endroit (1002) que le trajet du faisceau (114) traverse à chaque passage (200) et qui forme le point de départ commun (1000).

4. Dispositif optique (100) selon l'une quelconque des revendications 1 à 3, dans lequel l'ensemble réflecteur (106) présente au moins un ensemble de miroirs (1004) qui présente des miroirs partiels (1006) inclinés les uns par rapport aux autres.

5. Dispositif optique (100) selon la revendication 4, dans lequel le trajet de faisceau (114) est réfléchi par un autre miroir partiel (1006) à chaque passage (200).

6. Dispositif optique (100) selon la revendication 4 ou la revendication 5, dans lequel les miroirs partiels (1006) sont inclinés autour d'axes spatiaux (1010) parallèles les uns aux autres.

7. Dispositif optique (100) selon l'une quelconque des revendications 1 à 6, dans lequel le dispositif optique présente un ensemble optique télécentrique (126), dans le plan focal arrière (1012) duquel ou dans un plan optiquement conjugué à celui-ci duquel se trouve le point de départ commun (1000) des faisceaux partiels (118) découplés.

8. Dispositif optique (100) selon l'une quelconque des revendications 1 à 7, dans lequel les faisceaux partiels (118) se trouvent dans un plan (600).

9. Dispositif optique (100) selon l'une quelconque des revendications 1 à 8, dans lequel le dispositif optique présente une source lumineuse (130) qui est réalisée pour générer le faisceau lumineux (110) et dans lequel le faisceau lumineux (110) présente une longueur de cohérence (132) qui est inférieure à la longueur la plus courte du trajet de faisceau (114) entre deux faisceaux partiels (118) découplés successivement.

10. Dispositif optique selon la revendication 1, dans lequel les feuilles lumineuses (152) orientées différemment se croisent.

11. Microscope à feuille de lumière (104) avec un dispositif optique (100) selon l'une quelconque des revendications 1 à 10, qui est disposé dans un trajet de faisceau d'éclairage (160) qui s'étend depuis une source lumineuse (130) à un volume d'échantillon (154).

12. Kit de mise à niveau pour un microscope à feuille de lumière (104), dans lequel le kit de mise à niveau est un dispositif optique (100) selon l'une quelconque des revendications 1 à 10 qui est configuré de manière à pouvoir être disposé dans un trajet de faisceau d'éclairage (160) du microscope à feuille de lumière.

13. Utilisation d'un ensemble réflecteur (106) avec une entrée de faisceau (108), une sortie de faisceau (112) et un trajet de faisceau (114) situé dans l'ensemble réflecteur commençant sur l'entrée de faisceau et traversant la sortie de faisceau plusieurs fois, dans lequel, à chaque passage (116) de la sortie de faisceau, un faisceau partiel (118) est découplé de l'ensemble réflecteur, dans lequel les faisceaux partiels découplés sur la sortie de faisceau sont soit parallèles et espacés les uns des autres, soit partent d'un point de départ apparent commun (1000), dans un microscope à feuille de lumière (104) selon la revendication 11.

14. Procédé de génération automatique de feuilles de lumière (152) avec différentes orientations à partir d'un faisceau lumineux (110), dans lequel le procédé présente les étapes de procédé suivantes :
- l'injection du faisceau lumineux (110) dans un ensemble réflecteur (106),
- la réflexion multiple du faisceau lumineux (110) dans l'ensemble réflecteur, dans lequel le faisceau lumineux rencontre plusieurs fois une sortie de faisceau (116) de l'ensemble réflecteur et y est partiellement renvoyé dans l'ensemble réflecteur,
- le découplage à chaque fois d'un faisceau partiel (118) dirigé hors de l'ensemble réflecteur à partir du faisceau lumineux réfléchi dans l'ensemble réflecteur sur la sortie de faisceau, lorsque le faisceau lumineux dans l'ensemble réflecteur rencontre la sortie de faisceau,
dans lequel soit le faisceau partiel découplé s'étend parallèlement et à distance d'un faisceau partiel précédemment découplé, soit le faisceau partiel découplé et un faisceau partiel précédemment découplé partent d'un point de départ commun (1000), et
- la génération de feuilles de lumière orientées différemment à partir des faisceaux partiels découplés.

15. Procédé selon la revendication 14,
dans lequel le faisceau lumineux (110) et les faisceaux partiels (118) sont des impulsions lumineuses (170, 172) et les feuilles lumineuses (152) orientées différemment sont générées successivement dans le temps à partir de faisceaux partiels (118) successifs dans le temps.
